# EUROPEAN PATENT APPLICATION

(11) **EP 1 757 971 A1**
(43) Date of publication of application: **28.02.2007**
(21) Application number: 06017436.4
(22) Date of filing: 22.08.2006
(51) Int. Cl.: G02B 26/08

(54) **Variable-shape mirror, optical pickup therewith, and method for fabricating a variable-shape mirror**

(30) Priority: 22.08.2005 JP 2005239594
(71) Applicant: Funai Electric Co., Ltd., Daito-shi Osaka 574-0013 (JP)
(72) Inventor: Nagashima, Kenji, Daito-shi Osaka 574-0013 (JP); Fujii, Hitoshi, Daito-shi Osaka 574-0013 (JP); Tanaka, Fuminori, Daito-shi Osaka 574-0013 (JP); Sugiyama, Susumu Faculty of Science and Engineer., Shiga 525-8577 (JP); Ishii, Akira Faculty of Science and Engineering, Shiga 525-8577 (JP); Tanaka, Katsuhiko Faculty of Science and Engineer., Shiga 525-8577 (JP); Kuze, Wataru, Daito-shi Osaka 574-0013 (JP)
(74) Representative: Beetz & Partner

(57) **Abstract**

A variable-shape mirror has a support substrate, a mirror portion that faces the support substrate and that has a mirror surface on the side thereof opposite to the side thereof facing the support substrate, a plurality of fixing portions that fix the mirror portion to the support substrate, and a plurality of driving portions that deform the mirror surface by expanding and contracting between the support substrate and the mirror portion. On the support substrate, elevations are formed to serve as bonding surfaces bonded to the fixing portions, as electrodes bonded to the driving portions to feed voltages thereto, and as conductors electrically connected to the electrodes.

## Description

### BACKGROUND OF THE INVENTION

### 1. Field of the Invention

The present invention relates to a variable-shape mirror that permits the shape of the mirror surface thereof to be varied and that is designed for use in an optical pickup device or the like. More particularly, the present invention relates to the structure of a variable-shape mirror that can be assembled efficiently, and to a method for fabricating such a variable-shape mirror. The present invention also relates to an optical pickup device provided with such a variable-shape mirror.

### 2. Description of Related Art

When information is read from or written to an optical disc such as a CD (compact disc) or DVD (digital versatile disc) by the use of an optical pickup device, the relationship between the optical axis of the optical pickup device and the disc surface should ideally be perpendicular. In reality, however, when the disc is rotating, their relationship does not always remain perpendicular. As a result, with an optical disc such as a CD or DVD, when its disc surface becomes inclined relative to the optical axis, the optical path of laser light is so bent as to produce wavefront aberrations (mainly coma aberration). On the other hand, when optical discs to be played back with the optical pickup device are exchanged, their substrate thickness may vary. This also produce wavefront aberrations (mainly spherical aberration).

When such wavefront aberrations are produced, the spot of laser light shone on the optical disc deviates from the proper position, and, when the wavefront aberrations become larger than permitted, inconveniently, it becomes impossible to accurately write or read information. For this reason, there have conventionally been proposed methods for correcting for wavefront aberrations by the use of a variable-shape mirror.

For example, JP-A-H5-333274 proposes a variable-shape mirror in which a mirror itself is deformed with multilayer piezoelectric elements to achieve phase control. When this variable-shape mirror is assembled, before a mirror surface is formed, first, a mirror base and a pusher 103, for transmitting the displacements of actuators (for example, piezoelectric elements) 104 to the mirror 101, are put together; then the mirror base is processed to have a mirror surface; then the actuators 104 are put together; and then a filler material 106 with high hardness is so laid as to compensate for the variations in length among individual components, such as the actuators 104, and the variations in height resulting from different connection conditions among individual components. Purportedly, this assembly method offers enhanced assembly workability.

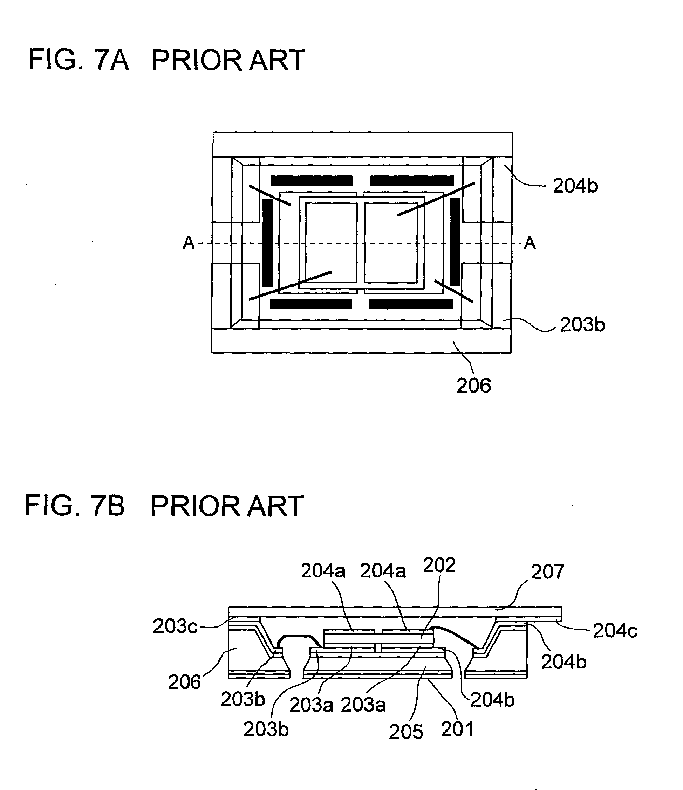

For another example, JP-A-2004-151631 presents, as a variable-shape mirror capable of correcting for wavefront aberrations, a variable-shape mirror having a unimorph structure and employing a piezoelectric element. This variable-shape mirror is structured, for example, as shown in FIGS. 7A and 7B. FIG. 7A shows the variable-shape mirror with the base substrate 207 thereof removed, as seen from the side opposite to the mirror member 201 thereof. FIG. 7B is a cross-sectional view of the variable-shape mirror, as cut along line A-A shown in FIG. 7A.

In this variable-shape mirror, to permit the mirror member 201 to be deformed with a low voltage, its substrate is etched to form a thin mirror portion. Moreover, to permit a voltage to be applied to the piezoelectric element 202, wiring electrodes 203 b and 204b are laid along an etched side wall from the back surface of a mirror substrate 205 (the surface thereof opposite to the mirror 201) so as to be electrically connected, at a beam 206, to electrodes 203c and 204c of the base substrate 207. Here, the wiring electrodes 203b and 204b are formed mainly of sputtered Al film; the film is first formed over the entire back surface of the mirror substrate 205, and is then patterned by photolithography. The piezoelectric element 202 has piezoelectric element electrodes 203a and individual electrodes 204a, and is formed by being bonded and wired to the back surface of the mirror substrate having the wiring electrodes 203b and 204b patterned thereon.

Inconveniently, however, the conventional variable-shape mirrors mentioned above have the following disadvantages. The variable-shape mirror disclosed in JP-A-H5-333274 requires complicated wiring to make the actuators operate. Thus, when the fitting of electrodes and wires is also taken into consideration, this variable-shape mirror cannot necessarily be said to offer enhanced assembly workability. Moreover, this variable-shape mirror requires too complicated wiring and too difficult assembly to be used in a small component such as an optical pickup device.

The variable-shape mirror presented in JP-A-2004-151631 does not require too complicated wiring and too difficult assembly to be used in a small component such as an optical pickup device, but its assembly involves orderly, one-by-one putting-together of components such as a piezoelectric element, substrates, different kinds of electrodes, and wires. This requires much assembly time, and results in poor work efficiency.

### SUMMARY OF THE INVENTION

In view of the conventionally encountered inconveniences mentioned above, it is an object of the present invention to provide a variable-shape mirror, i.e. a mirror capable of deforming the mirror surface thereof, that can be fabricated efficiently with less assembly steps and hence with less cost and that can accurately correct for aberrations. It is another object of the present invention to provide a method for fabricating a variable-shape mirror, i.e. a mirror capable of deforming the mirror surface thereof, efficiently with less assembly steps. It is still another object of the present invention to provide an optical pickup device that, as a result of being provided with a variable-shape mirror that can be fabricated efficiently, can be fabricated with enhanced work efficiency.

To achieve the above objects, according to the present invention, a variable-shape mirror is provided with: a support substrate; a mirror portion that faces the support substrate and that has a mirror surface on the side thereof opposite to the side thereof facing the support substrate; a plurality of fixing portions that fix the mirror portion to the support substrate; and a plurality of driving portions that deform the mirror surface by expanding and contracting between the support substrate and the mirror portion. Here, elevations are formed on the support substrate to serve as bonding surfaces bonded to the fixing portions, as electrodes bonded to the driving portions to feed voltages thereto, and as conductors electrically connected to the electrodes.

To achieve the above objects, according to the present invention, a method for fabricating a variable-shape mirror is directed to a variable-shape mirror provided with: a support substrate; a mirror portion that faces the support substrate and that has a mirror surface on a side thereof opposite to a side thereof facing the support substrate; and a driving portion that is provided between the support substrate and the mirror portion and that deforms the mirror surface by using a piezoelectric material. And the method involves: a step of forming an elevation on part of the support substrate; a step of forming a metal layer on the elevation; a step of bonding together part of the elevation and the piezoelectric material; and a step of cutting the piezoelectric material in a direction perpendicular to the support substrate so as not to cut part of the piezoelectric material bonded to the elevation.

With the structure and the method described above, the same piezoelectric material that is used in the driving portions is used also in the fixing portions; thus, after the piezoelectric material is bonded to the elevations provided on the support substrate, by removing the unnecessary part of the piezoelectric material by cutting it, it is possible to simultaneously form the driving portions and the fixing portions. This leads to enhanced work efficiency in the device production. Moreover, the electrode portions to which the piezoelectric material is bonded are formed as elevations higher than the conductor portions. Thus, even when the conductors are formed before the piezoelectric material is bonded, there is no risk of cutting the conductors during the cutting process for removing the unnecessary part of the piezoelectric material. Thus, the device has a structure that permits efficient, easy assembly. The enhanced work efficiency in the device production also helps reduce the cost of the variable-shape mirror.

According to the present invention, an optical pickup device is provided with a variable-shape mirror structured as described above. Here, the variable-shape mirror can be assembled with enhanced work efficiency, and can be wired easily; accordingly, the optical pickup device can be fabricated with enhanced work efficiency and hence with reduced cost.

### BRIEF DESCRIPTION OF THE DRAWINGS

FIG. 1A is a perspective view showing the structure of a variable-shape mirror embodying the invention;
FIG. 1B is a cross-sectional view taken along line a-a shown in FIG. 1A, showing the individual components put together;
FIG. 2A is a schematic cross-sectional view showing a modified example of the shape or the mirror portion of the variable-shape mirror embodying the invention;
FIG. 2B is a schematic cross-sectional view showing another modified example of the shape or the mirror portion of the variable-shape mirror embodying the invention;
FIG. 3A is a perspective view showing the structure of the elevations provided on the support substrate of the variable-shape mirror embodying the invention;
FIG. 3B is a cross-sectional view showing the structure of the elevations provided on the support substrate of the variable-shape mirror embodying the invention;
FIG. 4A is a diagram illustrating how the piezoelectric material is cut according to a method for fabricating a variable-shape mirror embodying the invention;

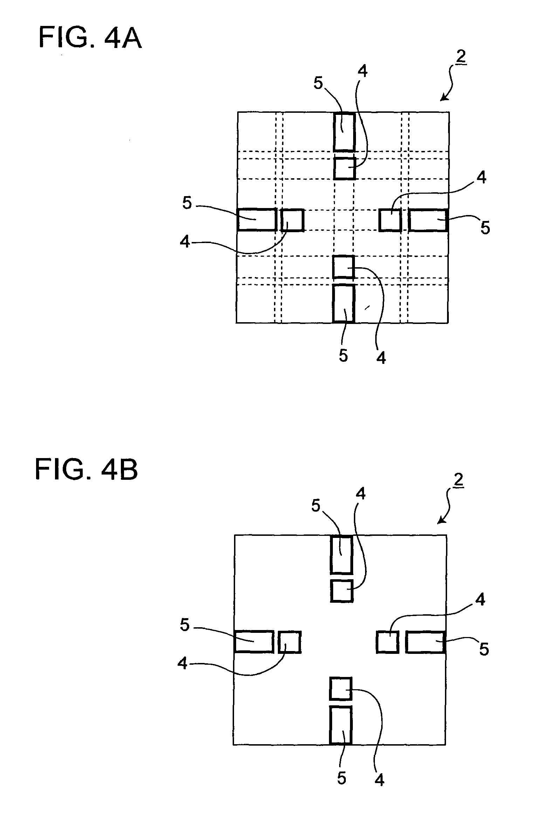

FIG. 4A is a diagram illustrating how the piezoelectric material is cut according to the method for fabricating a variable-shape mirror embodying the invention;

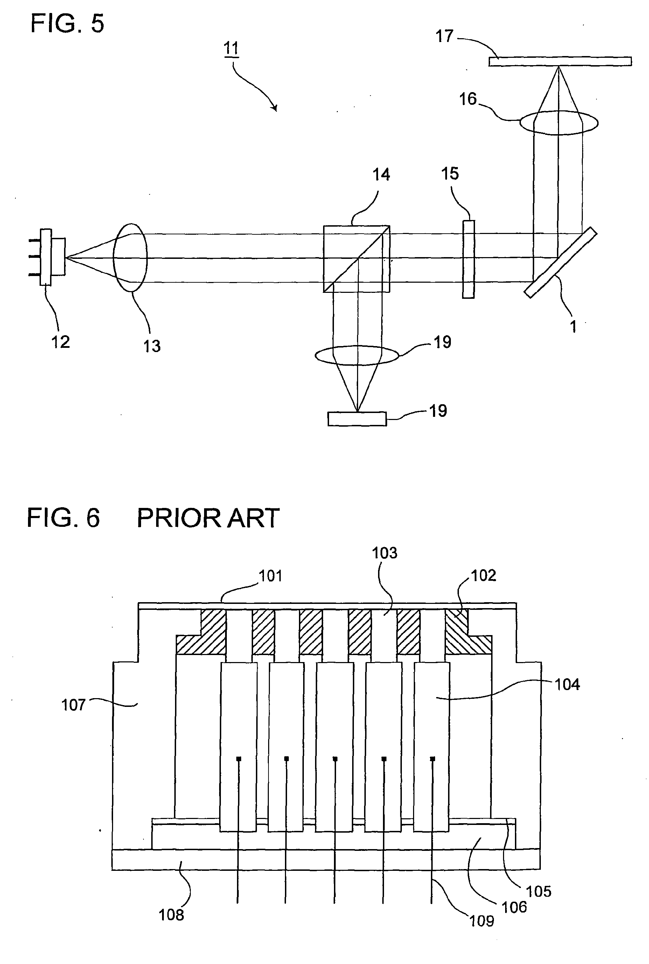

FIG. 5 is a schematic diagram showing the optical system of an optical pickup device embodying the invention;
FIG. 6 is a schematic diagram showing the structure of a conventional variable-shape mirror;
FIG. 7A is a schematic diagram showing the structure of a conventional variable-shape mirror; and
FIG. 7B is a cross-sectional view of the conventional variable-shape mirror, as cut along line A-A shown in FIG. 7A.

### DETAILED DESCRIPTION OF PREFERRED EMBODIMENTS

Hereinafter, embodiments of the present invention will be described with reference to the accompanying drawings. It should be understood that the embodiments described below are merely examples, and are therefore not meant to limit in any way the manner in which the present invention can be carried out. It should also be understood that, in the drawings, the sizes, thicknesses, and other dimensions of the components are exaggerated wherever necessary for easy understanding, and are therefore different from those actually observed.

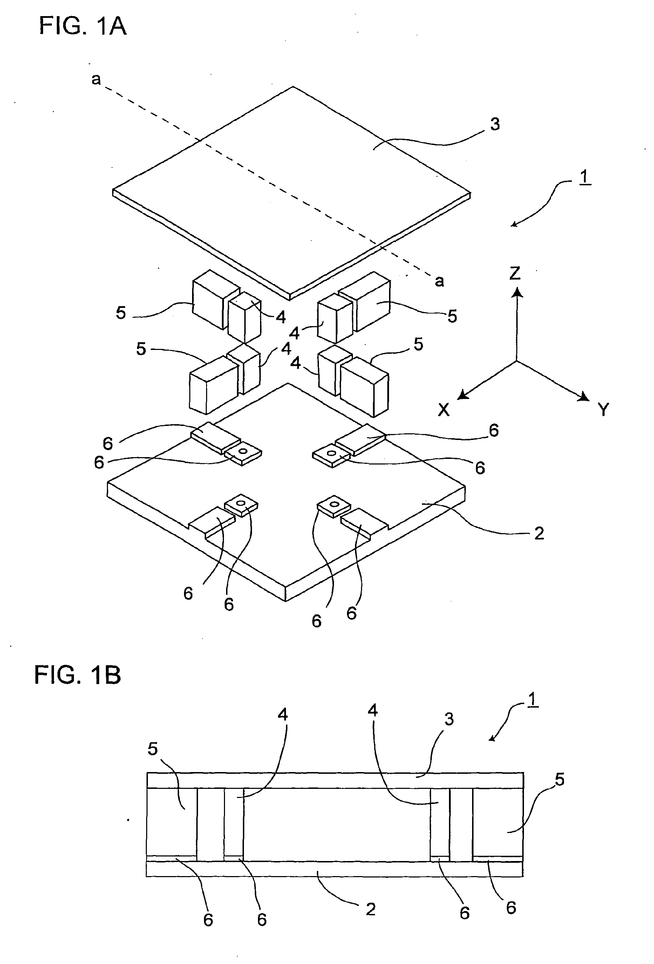

FIGS. 1A and 1B are diagrams showing the structure of a variable-shape mirror embodying the present invention. FIG. 1A shows the variable-shape mirror of the embodiment in a perspective view, with the individual components thereof exploded. FIG. 1B is a cross-sectional view taken along line a-a shown in FIG. 1A, showing the individual components put together.

Reference numeral 1 represents a variable-shape mirror according to the present invention, which is a mirror that corrects for aberrations by deforming the mirror surface of a mirror portion 3 thereof by exploiting the vertical displacement of piezoelectric elements (driving portions 4). Reference numeral 2 represents a support substrate on which driving portions 4 and fixing portions 5 are fitted. The support substrate 2 is formed of, for example, an insulating material such as ceramic or glass. Also provided on the support substrate 2 are first elevations 6, on which the driving portions 4 and the fixing portions 5 are arranged, and electrodes and conductors, via which the driving portions 4 are driven. These will be described later.

The mirror surface of the mirror portion 3 is deformed by the driving portions 4, and the mirror portion 3 reflects a light beam emitted from a light source. To achieve this, as shown in FIGS. 1A and 1B, the mirror portion 3 is so arranged that the driving portions 4 are held between it and the support substrate 2, on which they are arranged. To permit the mirror surface thereof to be deformed, the mirror portion 3 is formed of, preferably, a rigid substance; further preferably, the mirror portion 3 is formed of an electrically conductive substance. When the mirror portion 3 is formed of an electrically conductive substance, it is no longer absolutely necessary to separately provide electrodes and conductors via which to drive the driving portions 4. Thus, the variable-shape mirror 1 can be fabricated with enhanced assembly workability.

Examples of such a substance, i.e. a rigid, electrically conductive substance, include silicon and metals such as aluminum and iron. In a case where the mirror portion 3 is formed of an electrically non-conductive, insulating substance, such as glass, to achieve electrical conduction to the driving portions 4, it is necessary to form, on the side of the mirror portion 3 opposite to the mirror surface thereof, an electrode pattern by vapor-depositing gold or the like, or to fit an electrode to the side of the mirror portion 3 opposite to the mirror surface thereof.

The substance of which the mirror portion 3 is formed is not necessarily limited to a single material, but may be modified within the scope of the objects of the present invention. For example, it is possible to form a base portion of the mirror portion 3 with silicon and then lay thereon a coating of aluminum or the like to form a mirror surface. It is also possible to form a plurality of layers on the base portion.

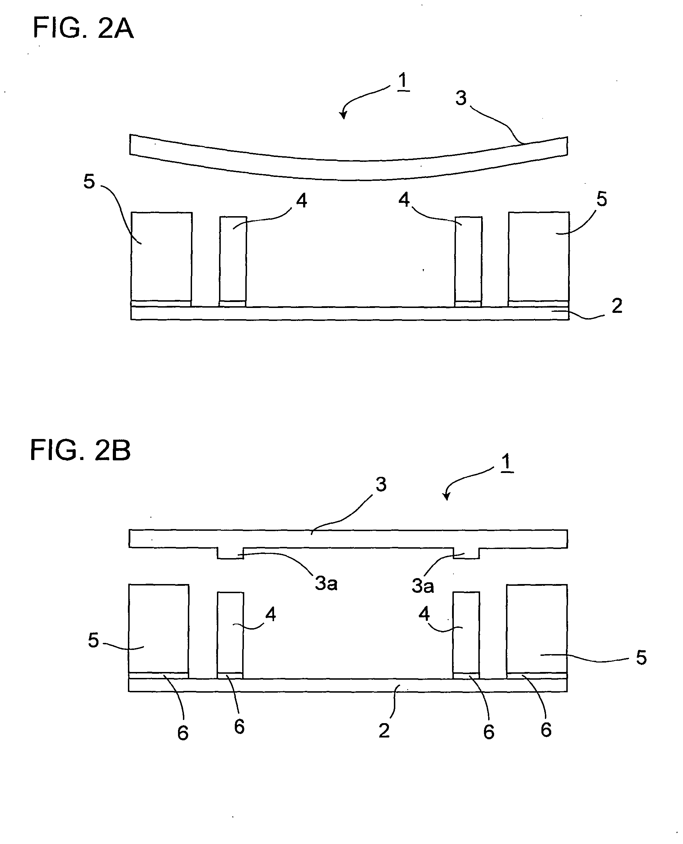

In this embodiment, the mirror portion 3 is flat-plate-shaped, but this is not meant to limit its shape to that particular shape. The shape of the mirror portion 3 may be modified within the scope of the objects of the present invention. For example, as shown in FIG. 2A, the mirror surface portion of the mirror portion 3 may be made concave so that the mirror portion 3 has a concave shape as a whole. Alternatively, as shown in FIG. 2B, projections 3a may be formed on the side of the mirror portion 3 opposite to the mirror surface, in parts thereof where the mirror portion 3 makes contact with the piezoelectric elements 4. FIGS. 2A and 2B are both cross-sectional views of the variable-shape mirror 1 shown in FIG. 1A, as cut along line a-a, showing its state before the mirror portion 3 and the fixing portions 5 are bonded together, for easy understanding of the shape of the mirror portion 3.

Here, if the mirror portion 3 and the driving portions 4 cannot be kept in contact with each other, the driving portions 4 remain out of contact with the electrodes; to avoid this, the mirror portion 3 and the driving portions 4 are usually bonded together. In a case where the mirror portion 3 is shaped as shown in FIG. 2A or 2B, even if the mirror portion 3 and the driving portions 4 are not bonded together, regardless of the expansion and contraction of the driving portions 4, the mirror portion 3 and the driving portions 4 can be kept bonded together. This makes it possible to omit the step of bonding the mirror portion 3 and the driving portions 4 together.

A concave-surfaced mirror portion 3 can be formed, for example, by laying together materials having different thermal contraction coefficients. A convex-surfaced mirror portion 3 can be formed, for example, by dry etching, provided that mirror portion 3 is formed of silicon.

The driving portions 4 are formed of, for example, a piezoelectric material such as PZT (lead zirconate titanate, Pb(ZrₓTi₁₋ₓ)O₃). This, however, is not meant to limit the material to PZT; instead, it is possible to use any piezoelectric ceramic other than PZT, or a piezoelectric polymer such as polyvinylidene fluoride.

As shown in FIGS. 1A and 1B, the driving portions 4 are sandwiched between the support substrate 2 and the mirror portion 3. In this embodiment, four of the driving portions 4 are arranged symmetrically in cross-shaped directions. The number and arrangement of the driving portions 4 are not limited to those specifically chosen in this embodiment. For well-balanced deformation of the mirror surface of the mirror portion 3 at different positions, however, it is preferable to arrange a plurality of driving portions 4 symmetrically; considering the size of the mirror portion 3 and other factors, it is further preferable to arrange four of them symmetrically in cross-shaped directions. Still further preferable is to arrange the driving portions 4 symmetrically about the axis passing through the center of the mirror surface perpendicularly thereto; this permits accurate, easy adjustment of the mirror surface. In a case where a plurality of driving portions 4 are provided, it is preferable that the heights of the individual components of the driving portions 4 be so adjusted as to prevent distortion on the mirror surface of the mirror portion 3.

The shape of the driving portions 4 is not particularly limited; it may have the shape of a rectangular parallelepiped, the shape of a cylindrical column, or any other shape. The shape of a rectangular parallelepiped, however, is preferable because it is easier to process in cutting, polishing, etc. and brings better work efficiency in the assembly of the variable-shape mirror 1.

As shown in FIGS. 1A and 1B, the fixing portions 5 are sandwiched between the support substrate 2 and the mirror portion 3, and are arranged, as seen in a plan view, outside the driving portions 4. The top faces of the fixing portions 5 are bonded to the mirror portion 3. Preferably, the heights of the driving portions 4 are made equal to prevent distortion on the mirror surface of the mirror portion 3; also preferably, the relationship between the heights of the fixing portions 5 and the driving portions 4 is adjusted to prevent distortion.

There are no particular restrictions on the material of which the fixing portions 5 are formed. The fixing portions 5 and the driving portions 4 may be formed of the same material. In a case where the fixing portions 5 and the driving portions 4 are formed of the same material, the heights of the fixing portions 5 and the driving portions 4 can be adjusted at a time, and thereafter they can be separated as individual components by being cut out of the material at a time. This helps enhance the efficiency of the assembly of the variable-shape mirror 1.

In this embodiment, the fixing portions 5 are arranged outside the driving portions 4. This, however, is not meant to limit to that arrangement. For example, to let the driving portions 4 serve also as fixing portions, the driving portions 4 may be arranged at the positions of the fixing portions 5. In this case, support portions need to be arranged at the positions of the driving portions 4 in this embodiment to deform the mirror surface.

The variable-shape mirror 1 composed of the individual components described above has, in this embodiment, the shape of a rectangular parallelepiped as a whole. Its shape, however, is not restricted to that particular shape, but may be modified within the scope of the objects of the present invention. For example, the support substrate 2, the mirror portion 3, etc. may be circular; the support substrate 2 may be larger than the mirror portion 3.

In the variable-shape mirror 1 of this embodiment, when voltages are applied to the electrodes provided on the support substrate 2 and the mirror portion 3, the driving portions 4 are driven. These electrodes are connected to the conductors provided on the support substrate 2 and the mirror portion 3. Of the electrodes and the conductors used to drive the driving portions 4, those provided on the mirror portion 3 have already been described above, and those provided on the support substrate 2 will now be described.

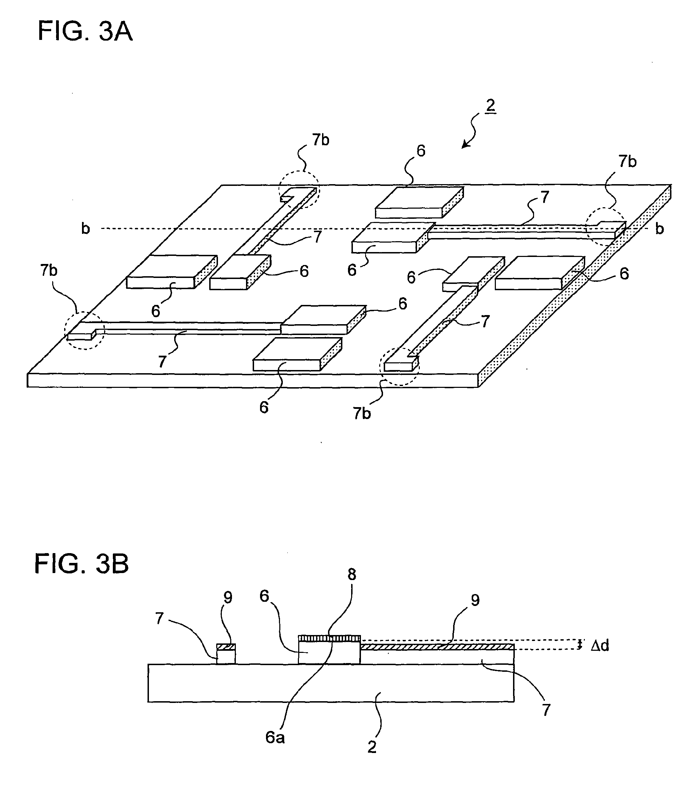

FIGS. 3A and 3B are diagrams showing the structure of the elevations provided on the support substrate 2. FIG. 3A is a perspective view, as seen obliquely from above, of the support substrate 2 shown in FIG. 1A. FIG. 3B is a cross-sectional view of the support substrate 2 shown in FIG. 3A, cut along line b-b.

On the support substrate 2, first elevations 6 are provided on which the driving portions 4 and the fixing portions 5 are arranged. On the support substrate 2, second elevations 7 are also provided. On these first and second elevations 6 and 7, an Au layer is formed. The parts of the Au layer formed on the first elevations 6 constitute electrodes 8, and the parts of the Au layer formed on the second elevations 7 constitute conductors 9. End portions 7b of the conductors form driving terminals for the driving portions 4. These driving terminals for the driving portions are located at the edges of the support substrate 2. Needless to say, the pattern in which the second elevations 7 are formed is not limited to the one specifically adopted in this embodiment.

In the structure of this embodiment, where the electrodes and the conductors are formed of the same material, when the electrodes 8 and the conductors 9 are formed on the first elevations 6 and the second elevations 7, for example, simply by forming an Au layer by vapor deposition, sputtering, or the like, it is possible to produce the electrodes 8 and the conductors 9. This brings enhanced work efficiency in the assembly of the variable-shape mirror 1. In this embodiment, an Au layer is used to form the electrodes 8 and the conductors 9. This, however, is not meant to pose any limitation; any modification is possible within the scope of the objects of the present invention. For example, instead of an Au layer, a Pt layer or the like may be used; the electrodes 8 and the conductors 9 may be formed of different materials.

Next, the first and second elevations 6 and 7 provided on the support substrate 2 will be described in detail. First, the reasons that those elevations are provided on the support substrate 2 will be explained. If no elevations are provided on the support substrate 2, when the electrodes 8 and the conductors 9 are formed, the places where these should not be formed need to be masked previously so that no Au is vapor-deposited there. This leads to lower work efficiency in the fabrication of the variable-shape mirror 1. In contrast, previously forming elevations eliminates the need to lay a mask before vapor-deposition or the like, and thus helps efficiently produce the electrodes 8 and the conductors 9, contributing to reduction of the cost of the variable-shape mirror 1. With respect to the first elevations 6 on which the driving portions 4 and the fixing portions 5 are arranged, providing elevations there to make those places higher than the surface of the support substrate 2 helps prevent the support substrate 2 from being cut when, after the driving portions 4 and the like are bonded to the first elevations 6, unnecessary parts located outside the first elevations 6 are cut off to be removed.

In this embodiment, as shown in FIG. 3B, on the top faces of the first elevations 6, bonding surfaces 6a are provided to which the driving portions 4 and the fixing portions 5 are bonded. Moreover, as shown in FIG. 3B, the bonding surfaces 6a provided on the first elevations 6 are formed higher by Δd than the highest parts of the second elevations 7. Although the Au layer forming the electrodes 8 and the conductors 9 is laid on top of the first and second elevations 6 and 7, since this layer is very thin, its thickness can mostly be ignored.

Forming the first elevations 6 higher than the second elevations 7 as described above has the following advantage. Even in a case where, first, the electrodes 8 and the conductors 9 are formed on the support substrate 2, then, for example, a piezoelectric material to later become the driving portions 4 and the fixing portions 5 is bonded to the bonding surfaces 6a of the first elevations 6, and then unnecessary parts are cut off with a dicer or the like to produce the driving portions 4 and the fixing portions 5, gaps are left between the piezoelectric material and the conductors 9, and thus the unnecessary parts can be removed without the conductors 9 being cut. This makes it possible to fabricate the variable-shape mirror 1 by the fabrication method described later, and thereby makes it possible to realize a variable-shape mirror 1 that can be assembled with enhanced work efficiency. Moreover, since this variable-shape mirror 1 can be assembled with enhanced work efficiency, its cost is low.

It should be noted that the difference Δd between the heights of the first and second elevations 6 and 7 is exaggerated in FIGS. 3A and 3B for easy understanding. Although not illustrated, in reality, the electrodes 8 and the conductors 9 are formed as an electrically continuous vapor-deposited layer. Thus, it is preferable that the difference Δd be made as small as possible so long as the conductors 9 are not cut during the above-mentioned cutting with a dicer or the like. This is because, the smaller the difference Δd, the more likely can the metal layer be vapor-deposited evenly on the first and second elevations 6 and 7, and less likely does conductor breakage occur between the electrodes 8 and the conductors 9. In this embodiment, the first and second elevations 6 and 7 are both formed in the shape of a rectangular parallelepiped. This, however, is not meant to pose any limitation; any other shape may be adopted. For example, in the first elevations 6, while bonding surfaces 6a are provided on the top faces thereof, their side faces may be given an inclination so as to obliquely expand.

Next, the fabrication method of the variable-shape mirror 1 according to the present invention will be described with reference to the relevant drawings.

First, on the support substrate 2, by processing such as etching or sand blasting, the first and second elevations 6 and 7, for example as shown in FIG. 3A, are formed. Here, the first and second elevations 6 and 7 are so formed that the former are higher than the latter. The shapes of the first and second elevations 6 and 7 are not limited to those shown in FIG. 3A. For easy arrangement of the driving portions 4 and the fixing portions 5, however, it is preferable that flat bonding surfaces 6a (see FIG. 3B) be provided on the first elevations 6.

Next, on the first and second elevations 6 and 7 formed on the support substrate 2, a metal layer is laid by, for example, vapor deposition or sputtering. This metal layer serves as the electrodes 8 and the conductors 9 via which the driving portions 4 are driven. The type of this metal layer is not particularly limited; any type will do so long as it is electrically conductive, examples including Au and Pt.

Next, on the support substrate 2, a piezoelectric material having the same area as the support substrate 2 is mounted, and the piezoelectric material is bonded to the bonding surfaces 6a on the first elevations 6. The bonding here is achieved, under heat, by applying a pressure between, on one hand, the driving portions 4 and the fixing portions 5 and, on the other, the support substrate 2. Here, in a case where the metal layer used as the electrodes 8 is an Au layer, it is preferable that the driving portions 4 and the fixing portions 5 be pressure-bonded to the support substrate 2 at a temperature equal to or higher than 400°C but equal to or lower than 500°C. This results in a higher bonding strength than when the bonding is performed without an Au layer. Incidentally, at a temperature lower than 370°C, bonding is insufficient and, at a temperature over 500°C, the bonding strength is low as shown below.

**TABLE 1**

| Temperature (°C) | Bonding Strength (MPa) |
|---|---|
| 450 | 22.5 |
| 500 | 20.4 |
| 550 | 19.7 |

The bonding strength was measured on a tensile tester (Micro Tester Model 5848, manufactured by Instron Corporation).

Next, as shown in FIG. 4A, the piezoelectric material is cut along broken lines in the figure, for example, with a dicer, while care is taken not to cut the parts thereof bonded to the first elevations (the parts indicated by thick lines in the figure). Now, as shown in FIG. 4B, the unnecessary part of the piezoelectric material that is not bonded to the support substrate 2 is removed, and thus the driving portions 4 and the fixing portions 5 are left. FIGS. 4A and 4B are top views of the variable-shape mirror 1, with the mirror portion 3 removed.

Through the procedure described above, with less fabrication steps, the driving portions 4 for deforming the mirror surface, the fixing portions 5 for fixing the mirror portion 3, and the electrodes 8 and the conductors 9 for driving the driving portions 4 are formed on the support substrate 2. Thus, by then bonding the mirror portion 3 to the fixing portions 5, the variable-shape mirror 1 of the embodiment shown in FIGS. 1A and 1B is obtained. Here, the mirror portion 3 may or may not be bonded to the driving portions 4.

In this embodiment, a piezoelectric material having the same area as the support substrate 2 is mounted on the support substrate 2, and the part of the piezoelectric material other than the parts to be formed into the driving portions 4 and the fixing portions 5 is cut out and removed as an unnecessary part. This makes the adjustment of the heights of the driving portions 4 and the fixing portions 5 and other work easy, and is thus advantageous in terms of work efficiency, though with the simultaneous disadvantage that a large part of the expensive piezoelectric material is wasted. To improve this, for example, so long as the work efficiency in the adjustment of the heights of the driving portions 4 and the fixing portions 5 and other work is not lowered, the piezoelectric element may be previously cut into smaller pieces so that the variable-shape mirror 1 is fabricated from those pieces, with fixtures for keeping them in position inserted into gaps formed as a result of the piezoelectric element being cut into smaller pieces. This helps reduce the increase in the fabrication cost.

Next, an optical pickup device 11 employing the variable-shape mirror according to the present invention will be described. The optical system of the optical pickup device 11 incorporating the variable-shape mirror 1 according to the present invention is built, for example, as shown in FIG. 5. The optical system of the optical pickup device 11 may be built in any other manner within the scope of the objects of the present invention.

The optical pickup device 11 shown in FIG. 5 is provided with a semiconductor laser 12, a collimator lens 13, a beam splitter 14, a variable-shape mirror 1 according to the present invention, a quarter-wave plate 15, an objective lens 16, a condenser lens 18, and a photodetector 19.

The laser light emitted from the semiconductor laser 12 is converted into parallel light by the collimator lens 13. The parallel light then passes through the beam splitter 14, then has the polarization state thereof changed by the quarter-wave plate 15, is then reflected on the variable-shape mirror 1, and is then condensed by the objective lens 16 so as to be focused on an optical disc 17. The laser light reflected from the optical disc 17 passes through the objective lens 16, is then reflected on the variable-shape mirror 1, then passes through the beam splitter 14, and is then condensed by the condenser lens 18 so as to be directed to the photodetector 19.

In this embodiment, the variable-shape mirror 1 serves, on one hand, as an up-directing mirror. On the other hand, in this optical system, when the optical disc 17 is inclined relative to the direction perpendicular to the optical axis of the laser light, coma aberration is produced as described earlier, and this coma aberration can be corrected for by deforming the mirror surface of the variable-shape mirror 1, which thus serves, on the other hand, to correct for aberrations. Specifically, based on the signal obtained from the photodetector 19, if it is found that wavefront aberrations such as coma aberration need to be corrected for, a signal is transmitted from a controller (unillustrated) provided in the optical pickup device 11 to the variable-shape mirror 1 so that the mirror surface of the mirror portion 3 is so deformed as to correct for aberrations.

In an optical pickup device 11 like this, using the variable-shape mirror 1 according to the present invention not only makes it possible to accurately correct for aberrations but also helps enhance the work efficiency in the fabrication of the optical pickup device 11 since the variable-shape mirror 1 requires less assembly steps and does not require complicated wiring for the driving of the variable-shape mirror 1. It is also possible to reduce the cost of the optical pickup device 11.

## Claims

1. A variable-shape mirror (1) comprising:
a support substrate (2);
a mirror portion (3) that faces the support substrate and that has a mirror surface on a side thereof opposite to a side thereof facing the support substrate;
a plurality of fixing portions (5) that fix the mirror portion to the support substrate; and
a plurality of driving portions (4) that deform the mirror surface by expanding and contracting between the support substrate and the mirror portion,
**characterized in that**
elevations are formed on the support substrate to serve
as bonding surfaces bonded to the fixing portions,
as electrodes (8) bonded to the driving portions to feed voltages thereto, and
as conductors (9) electrically connected to the electrodes.

2. The variable-shape mirror of claim 1,
wherein, on the support substrate (2), the electrodes (8) are formed higher than the conductors (9).

3. The variable-shape mirror of claim 1 or 2,
wherein the fixing portions (5) and the driving portions (4) are formed of a same piezoelectric material.

4. The variable-shape mirror of one of claims 1 to 3,
wherein the bonding surfaces, the electrodes (8), and the conductors (9) are formed of a metal layer of a same kind.

5. The variable-shape mirror of one of claims 1 to 3,
wherein the bonding surfaces, the electrodes (8), and the conductors (9) are formed of an Au layer.

6. The variable-shape mirror of claim 5,
wherein the Au layer is heat-treated at a temperature equal to or higher than 400°C but equal to or lower than 500°C.

7. The variable-shape mirror of one of claims 1 to 6,
wherein the mirror portion (3) is formed of an electrically conductive material.

8. The variable-shape mirror of one of claims 1 to 7,
wherein the driving portions (4) and the fixing portions (5) are provided in four pairs arranged symmetrically in cross-shaped directions.

9. An optical pickup device comprising the variable-shape mirror of one of claims 1 to 8.

10. A method for fabricating a variable-shape mirror (1) including:
a support substrate (2);
a mirror portion (3) that faces the support substrate and that has a mirror surface on a side thereof opposite to a side thereof facing the support substrate; and
a driving portion (4) that is provided between the support substrate and the mirror portion and that deforms the mirror surface by using a piezoelectric material,
the method comprising:
a step of forming an elevation on part of the support substrate;
a step of forming a metal layer on the elevation;
a step of bonding together part of the elevation and the piezoelectric material; and
a step of cutting the piezoelectric material in a direction perpendicular to the support substrate so as not to cut part of the piezoelectric material bonded to the elevation.

11. The method of claim 10,
wherein the metal layer is so formed as to include
an electrode (8) bonded to the driving portion (4) to feed a voltage thereto and a conductor (9) electrically connected to the electrode.

12. The method of claim 10 or 11,
wherein part of the elevation where the electrode (8) is formed is formed higher than part of the elevation where the conductor (9) is formed.

13. The method of one of claims 10 to 12,
wherein the step of bonding is achieved by pressure-bonding together the part of the elevation and the piezoelectric material under heat.

14. The method of one of claims 10 to 13,
wherein the metal layer is an Au layer, and the part of the elevation and the piezoelectric material are pressure-bonded together under heat at a temperature equal to or higher than 400°C but equal to or lower than 500°C.
